# FASCICULE DE BREVET EUROPEEN

(11) **EP 2 460 647 B1**
(45) Date de publication et mention de la délivrance du brevet: **02.04.2014**
(21) Numéro de dépôt: 11008945.5
(22) Date de dépôt: 10.11.2011
(51) Int. Cl.: B29C 70/20, B29C 70/38, B64C 27/46

(54) **Fabrication de pièces renforcées en matériaux composites à ligne de croisement unique**
Herstellung von verstärkten Teilen aus Verbundwerkstoff mit einer einzigen Kreuzungslinie
Production of parts reinforced with composite materials with a single crossing line

(30) Priorité: 03.12.2010 FR 1004713
(43) Date de publication de la demande: 06.06.2012
(73) Titulaire: Airbus Helicopters, 13725 Marignane Cedex (FR)
(72) Inventeur: Gaffiero, Jacques, 75017 Paris (FR); Amari, André, 60520 La chapelle en Serval (FR); Rinaldi, Bénédicte, 75014 Paris (FR); Trallero, Didier, 95570 Bouffemont (FR)
(74) Mandataire: GPI & Associés

(56) Documents cités:
- US-A1- 2004 074 592
- US-A1- 2006 172 636

## Description

L'invention a pour domaine technique général la fabrication de pièces réalisées avec des matériaux composites et notamment de pièces comportant un revêtement de renforcement. De telles pièces sont souvent recherchées dans des applications techniques et en particulier dans des applications aéronautiques, par exemple pour les avions, hélicoptères ou autres aéronefs.

La présente invention concerne plus particulièrement la fabrication d'un revêtement de renforcement qui utilise les technologies dites de placement de fibres.

L'expression « placement de fibres » englobe ici d'une part la technologie comportant un mandrin de bobinage associé à un bras de dépose et d'autre part la technologie de placement de fibres par l'intermédiaire d'un bras robot de dépose uniquement.

Le placement de fibres est une technologie de dépose de fibres, rubans, mèches ou autres renforts similaires, secs ou préimprégnés de résine, sur les surfaces préférablement convexes ou plane d'un corps à recouvrir en volume. Ce placement de fibres renfort sur une surface solide du corps à recouvrir, est effectué par application et positionnement de rubans, mèches ou autres renforts similaires, grâce à un dispositif de positionnement, ou tête de placement, comportant au moins un système de guidage et de mise en pression des fibres sur la surface, tel qu'un rouleau souple équipé de patin latéraux de guidage des rubans. Ce dispositif de placement assure donc le positionnement des fibres sur la surface par contact mécanique direct sans besoin de tension particulière au niveau des fibres. La tête de placement est elle-même animée par un système de déplacements, de type bras robot ou portique de positionnement, dont les degrés de libertés sont asservis suivant la géométrie de la surface du corps à couvrir.

Le procédé de placement de fibre permet donc notamment de couvrir des surfaces concaves, dans les limites de l'encombrement de la tête, et permets aussi de réaliser automatiquement des opérations de dépose de fibres discontinues telles que des opérations d'amorçage, de dépose, de découpe de renforts. Les trajectoires données aux fibres déposées peuvent être très complexes mais restent notamment limitées par la raideur apparente dans le plan du ruban du matériau déposé. Une installation de placement de fibres peut se concevoir avec plusieurs têtes de placement oeuvrant simultanément sur la même pièce, notamment afin d'améliorer la productivité du système.

Le bobinage réalisé sur un corps solide, préférablement de révolution, est appliqué par un mouvement relatif de type hélicoïdal entre la pièce à couvrir et la bobine ou galette de matière à déposer, après avoir initialement lié une extrémité des fibres sur la pièce à couvrir. Le mouvement de type hélicoïdal est assuré par combinaison d'au moins un mouvement de rotation et d'un mouvement de translation typiquement suivant un axe parallèle à l'axe de rotation. D'autres degrés de translation ou rotation supplémentaires sont possibles suivant la complexité des formes à couvrir.

La matière renfort est ainsi déposée de façon continue et est positionnée et appliquée par le seul effet d'une tension pilotée entre le point de dépose sur la surface et le point de sortie du système support de bobine de matière renfort. Cette tension et la localisation du point de sortie, typiquement un oeillet, sont assurées par le pilotage de la machine de bobinage suivant les caractéristiques du renforcement à réaliser. La matière renfort n'est donc pas positionnée par application sur la surface par l'intermédiaire d'un rouleau ou élément équivalent.

Le bobinage « simple » décrit ci-dessus peut aussi présenter des variantes « complexes » afin d'améliorer notamment la productivité de l'opération. On peut par exemple multiplier le nombre de rubans bobinés simultanément sur la pièce, soit en les associant pour former un ruban plus large, ou plus épais, soit en les répartissant en plusieurs endroits sur la pièce, de façon longitudinale, c'est à dire parallèle à l'axe de rotation, soit en les répartissant de façon circulaire, c'est-à-dire suivant une couronne autour de la pièce en rotation.

Le procédé de tressage, autre procédé de dépose partiellement similaire, se distingue du procédé de bobinage, par le fait que deux groupes de rubans ou mèches sont déposés simultanément sur un mandrin solide suivant deux groupes de trajectoires hélicoïdales coaxiales, de sens opposés, et se croisant alternativement soit en passant par-dessus soit en passant par-dessous l'une de l'autre afin de produire une dépose comparable à un tissage fermé et « tubulaire ».

L'invention concernée trouve donc son application dans le domaine de la réalisation des pièces composites par placement de fibres, par exemple pour réaliser un revêtement de pale d'hélicoptère.

Dans le cadre de la présente invention, les définitions suivantes sont également à prendre en considération.

Par «dépose», il convient d'entendre une opération de placement sur une pièce d'un ou plusieurs rubans en matériaux composites d'une couche donnée.

Par « couche », on entend recouvrement partiel ou total de matière de renfort sur une surface donnée de la pièce suivant une épaisseur égale à l'épaisseur élémentaire de la matière déposée, typiquement des fibres, rubans, mèches ou autres équivalents.

Le « nombre de déposes » correspond au nombre d'opérations de déposes nécessaires pour placer sur une pièce l'ensemble des rubans d'une couche.

Par « motif », il convient d'entendre un dessin apparent obtenu par une ou plusieurs lignes de croisement de rubans à la surface du revêtement ou dans l'épaisseur du revêtement, notamment si ces derniers sont recouverts d'un tissu de surface par exemple pour faciliter une opération de finition peinture.

Par définition le «pas» est un espace vide de dépose entre deux rubans déposés l'un à coté de l'autre, consécutivement ou simultanément selon le procédé, suivant une même direction, mesuré suivant une direction perpendiculaire à la direction de dépose des rubans avec la convention qu'un pas de n correspond à un espace laissé libre entre les deux rubans égal à (n-1) fois la largeur du ruban.

Par « ruban pré-imprégné », il faut comprendre des fibres par exemple sous forme d'un ruban imprégné, avant son placement sur la pièce, avec une matrice du genre résine.

La réalisation de revêtements par exemple d'une pale d'hélicoptère consiste en général à empiler des tissus pré imprégnés, dits équilibrés en sens chaîne et trame, disposés à +/-45° par rapport à l'axe de pas, afin d'assurer la reprise des moments de torsion. Autrement dit, cette orientation permet d'optimiser le comportement mécanique de la pale en torsion. Un tel agencement de fibres tissées présente un bon comportement en cas de choc, car la propagation des endommagements est limitée par l'entrelacement des fibres que présentent, par définition, les tissus. Il est à noter que dans ce cas des orientations complémentaires sont nécessaires pour assurer la reprise des efforts centrifuges et des efforts dus à la flexion de la pale, par exemple 0°/90°.

La tendance actuelle est d'utiliser des préformes composites réalisées par placement de fibres, pour améliorer la productivité.

La réalisation de pièces par placement de fibres, obtenu par l'intermédiaire de moyens de placement du type bras robot ou équivalent, conduit généralement à des aspects de surface qui sont assimilables à des superpositions de nappes unidirectionnelles, car les rubans de fibres sont disposés bord à bord. Ces aspects de surface ne sont pas satisfaisants par rapport à la résistance aux dommages dans la mesure où les endommagements se propagent rapidement suivant la direction des fibres.

En cas d'impact sur une surface réalisée en matériaux composites du type nappes unidirectionnelles, on observe que l'endommagement est relativement important car les ruptures (fissures) dans la matrice ou résine d'imprégnation se propagent très facilement entre les fibres alignées et cela tant que la fissure ne rencontre pas d'obstacle physique.

Divers documents ayant été rapprochés de l'invention sont cités.

Le document NLR du 16 juin 2010 « NLR AND TU DELFT IMPROVE COMPOSITE DAMAGE TOLERANCE WITH NEW AP-PLY FIBRE ARCHITECTURE », décrit l'utilisation d'un croisement de couches des matériaux composites constituant des motifs de placement dans le but d'augmenter la tolérance aux dommages. Les motifs décrits ne sont en revanche pas optimisés pour s'adapter aux divers chocs et impacts auxquels une pale d'hélicoptère, ou une pale d'hélice peut être exposée.

Le document US20040074592 décrit un matériau composite à orientation multiple employant une résine imprégnée selon le préambule de la revendication 1. Des bandes de filaments sont imprégnées avec une résine solide ou semi solide. Le matériau obtenu possède un nombre varié de couches et d'orientations au sien de la feuille de matériau composite formée. Une préforme est produite pour déterminer les caractéristiques de charge du composant en composite, et le nombre de couches ainsi que leurs orientations sont choisies en fonction de ces caractéristiques. Un décalage de 90° est prévu entre les filaments.

Le document US20090098337 décrit des articles tels que cage à turbine, sensiblement cylindrique et en matière composite. Selon des exemples, plusieurs plis de fibres unidirectionnelles sont entrelacés suivant des orientations variées, de 0° à 90° dont 45° dans certains cas.

Le document US6227805 de la Demanderesse, décrit une technique pour réaliser une pale en matériau composite selon un procédé RTM dans lequel un revêtement d'enveloppe, des longerons et des renforts d'accrochage de la pale sont respectivement constitués d'au moins une découpe de tissus qui comprend au moins deux plis de tissus de fibres de carbone croisées, ces plis étant superposés les uns sur les autres en formant entre eux un angle prédéterminé.

Le document EP1035963 décrit un système de commande et d'applicateur permettant de créer des motifs en laissant un intervalle d'une bande sans définition claire d'un type de motif. L'un des objectifs est l'amélioration de la performance structurale d'une pièce composite. La limitation liée au moyen de placement de fibres du type à bras robot seul, qui réalise des revêtements en moule femelle est telle que les drapages résultants, assimilables à des superpositions de nappes unidirectionnelles, n'ont pas un comportement optimisé en tolérance au dommage.

Le document US2006172636 décrit la préparation de préformes comportant une résine et plusieurs couches d'étoupe à fibres orientées, en remplacement des traditionnels renforts pré imprégnées dits « prepegs », pour faciliter la fabrication et réduire les coûts, e.g. de barres de lames de turbines à vents. Diverses orientations des fibres sont proposées dans les préformes, i.e. parallèles, sécantes, en damier et en arc de cercles concentriques. Pour les préformes de barres de lames de turbines, l'orientation des fibres est parallèle, sans croisement.

La présente invention est définie par les revendications.

L'invention propose un procédé de fabrication d'un revêtement de renforcement, permettant de s'affranchir des limitations mentionnées ci-dessus.

Avec ce procédé un revêtement de renforcement présente une tolérance optimisée aux dommages.

Ce procédé est adapté à différentes techniques de placement de fibres.

Suivant une réalisation de l'invention, ce procédé de fabrication d'un revêtement de renforcement pour une pièce en matériaux composites, utilise des fibres de renforcement pré-imprégnées, ou sèches, sous forme de rubans ou de mèches, et consiste à déposer par placement de fibres lesdits rubans ou mèches sur la pièce. Ce procédé consiste à :
- utiliser deux couches croisées de rubans longitudinaux,
- localiser les parties de la pièce ou de l'environnement de la pièce constitutive de l'origine ou des origines de dépose des rubans,
- déterminer les directions de placement des rubans de chacune des couches par rapport à une direction déterminée de la pièce et déterminer l'ordre de dépose de chacun des rubans suivant une des directions pour définir au moins une direction de la ou des lignes de croisement des rubans,
- déterminer un espace vide de dépose, désigné par «le pas» entre deux rubans déposés consécutivement suivant une même direction,
- déterminer pour les deux couches, le nombre de rubans par opération de dépose, le pas des rubans déposés avec chaque opération de dépose ainsi que le nombre d'opérations de dépose,
- établir l'ordre de réalisation des opérations de dépose de chaque ruban suivant chaque direction,
- et réaliser la séquence de dépose suivant l'ordre et le pas établis afin de superposer ou entrelacer les rubans de deux déposes successives pour reconstituer les deux couches avec une ou plusieurs lignes de croisement formant des motifs particuliers.

On constate effectivement qu'une nervure ou un croisement d'une nappe avec une autre nappe, constitue une discontinuité de forme qui génère une barrière à la propagation des endommagements. La création d'une multitude de croisements de nappes, obtenus à l'aide d'une dépose de rubans en motifs, est donc particulièrement intéressante pour améliorer la performance en tolérance aux dommages et impacts.

En revanche, une ligne de discontinuité est de nature créer une limitation de raideur ou de tenue mécanique suivant une direction perpendiculaire à la ligne de discontinuité. Il est donc important de maîtriser la longueur et l'orientation de ces lignes de façon à les disposer au mieux, notamment, pour le cas du revêtement de la pale dont le sens des efforts de torsion est orienté à +/- 45° par rapport à l'axe longitudinal de la pièce, par exemple une pale.

Le procédé conforme à l'invention consiste à orienter les lignes de discontinuité suivant une direction parallèle à une direction longitudinal de la pièce (par exemple une pale) et à limiter le nombre ou la longueur de ces lignes de discontinuité afin de ne pas trop perturber les caractéristiques de raideurs des renforts: il est suffisant, de ne disposer que d'une seule ligne de croisement de fibres, suivant une direction parallèle à la direction longitudinale de cette pièce.

La mise en oeuvre du placement de rubans grâce au pilotage spécifique des lignes de croisement de couches de rubans permet ainsi d'obtenir différents motifs apparents de placement.

Le procédé conforme à l'invention permet ainsi de proposer des types de motifs de placement de rubans améliorant le comportement des revêtements, par exemple d'une pièce, par exemple une pale, à la tolérance aux dommages et ce grâce aux croisements particuliers des couches de rubans créant des barrières à la propagation de fissures.

Selon un exemple, le procédé conforme à l'invention consiste à utiliser des rubans, ou mèches dont la largeur est comprise entre 6.35mm et 100mm, dont l'épaisseur est comprise entre 0.2mm et 0.4mm et dont la longueur est comprise entre 100mm et 1000mm. Ces valeurs données à titre d'exemples, peuvent bien évidemment être adaptées à la taille de la pièce.

Selon un exemple de mise en oeuvre, le procédé conforme à l'invention consiste à utiliser bandes, mèches ou fibres sèches ou pré imprégnées, de verre, aramide, basalte, carbone , ou autres fibres naturelles telle fibres de lin, chanvre, coton, soie pour réaliser les rubans.

Selon une mise en oeuvre, le procédé conforme à l'invention consiste à localiser la partie de la pièce constituant l'origine pour les opérations de dépose dans le plan des douilles de brochage de la pale, et sur la ligne de vrillage de la pièce, par exemple une pale. C'est à partir de cette origine que l'on localise l'origine de chaque couche.

Selon une mise en oeuvre, le procédé conforme à l'invention consiste à croiser en les superposant les rubans des deux couches en choisissant pas égal à 1, 2, 3, 4, 5, 6, 7, 8 ou un nombre entier ou non quelconque de largeur de rubans.

Selon une autre mise en oeuvre, le procédé conforme à l'invention consiste à croiser en les entrelaçant les rubans des deux couches en choisissant un pas égal à 1, 2, 3, 4, 6 ou 8 ou un nombre entier déterminé quelconque de largeur de rubans.

Selon une mise en oeuvre, le procédé conforme à l'invention consiste à croiser en les entrelaçant simultanément un nombre « x » de rubans de la première couche avec un nombre « x » rubans de la seconde couche, lesdits rubans présentant un pas égal à « y ».

Selon une mise en oeuvre, le procédé conforme à l'invention consiste à croiser en les entrelaçant simultanément deux rubans de la première couche avec deux rubans de la seconde couche, lesdits rubans présentant un pas égal à 2.

Selon une mise en oeuvre, le procédé conforme à l'invention consiste à croiser en les entrelaçant simultanément quatre rubans de la première couche avec quatre rubans de la seconde couche, lesdits rubans présentant un pas égal à 2.

Selon une mise en oeuvre, le procédé conforme à l'invention consiste à utiliser une orientation angulaire des rubans de chaque couche, respectivement de +/- 45° par rapport à une direction donnée de la pièce.

Selon une mise en oeuvre, le procédé conforme à l'invention consiste à utiliser une orientation angulaire des rubans de chaque couche, respectivement de 0° et 90° par rapport à une direction donnée de la pièce.

On peut également choisir des motifs de couches avec d'autres angles de croisement.

Selon un exemple de mise en oeuvre, le procédé consiste à déterminer un écartement entre les rubans de chacune des couches. Les motifs présentent alors des espaces vides entre les rubans à la fin de la dépose. Il suffit pour cela de choisir par exemple un pas non entier, par exemple égal à 1,5

Selon une mise en oeuvre, le procédé conforme à l'invention consiste à positionner cette unique ligne de croisement de couches en corde de la pièce. Par exemple pour une pale, ceci permet de limiter les pertes de caractéristiques de raideur sur la zone de caissons de torsion.

Selon un exemple de mise en oeuvre, le procédé conforme à l'invention consiste à choisir des motifs avec des lignes de croisements de plusieurs couples de couches qui sont volontairement décalées entre elles, parallèles ou suivant deux directions formant un angle quelconque, afin de limiter les pertes de caractéristiques de raideur sur les revêtements. On évite ainsi les concentrations d'abattement de caractéristiques.

Par abattement de caractéristiques on entend une réduction des performances mécaniques, de rupture en traction et de niveau de raideur suivant le sens fibres par exemple, liées à la perturbation de l'alignement des fibres.

Un tel décalage des couches est obtenu par exemple simplement en décalant l'origine de dépose d'une direction par rapport à l'autre (on parle aussi de déphasage).

Les objets assignés à l'invention sont également atteints à l'aide d'une pièce en matériaux composites comportant un revêtement renforcé fabriqué selon le procédé conforme tel que précité.

Les objets assignés à l'invention sont également atteints à l'aide d'une pale pour rotor principal d'un giravion ou d'un hélicoptère, comportant un revêtement renforcé fabriqué selon le procédé tel que précité.

Les objets assignés à l'invention sont également atteints à l'aide d'une pale pour rotor anti-couple d'un giravion ou d'un hélicoptère, comportant un revêtement renforcé fabriqué selon le procédé tel que précité.

Les objets assignés à l'invention sont également atteints à l'aide d'une pale pour hélice d'un moteur d'aéronef, comportant un revêtement renforcé fabriqué selon le procédé tel que précité.

Un avantage du procédé conforme à l'invention réside dans la maîtrise du nombre et de la position des lignes de croisement et des motifs ainsi obtenus. Une telle maîtrise permet d'améliorer le comportement mécanique des pièces pourvues d'un revêtement de renforcement et notamment de limiter la propagation de fissures après impact ou endommagement.

Un autre avantage du procédé conforme à l'invention réside dans son application sur toute pièce du type panneau, virole, calotte sphérique, tronc de cône etc.

Un autre avantage du procédé conforme à l'invention réside dans le fait qu'il permet de réaliser des revêtements avec des motifs spécifiques de croisement de rubans, pouvant être choisis pour s'adapter notamment aux dimensions et/ou aux formes de la pièce.

Un autre avantage du procédé conforme à l'invention réside dans le fait qu'il permet de réaliser des revêtements avec des lignes de croisement des couches qui sont décalées entre les multiples couples de couches constituant l'épaisseur de la pièce En effet, il faut éviter d'avoir des superpositions des lignes de croisement des couches entre deux couples de couches successives ce qui pourrait créer une zone de faiblesse de tenue mécanique.

Ainsi il est possible de décaler entre elles les positions des lignes de croisement de couches en modifiant la position de l'origine de placement d'une série suivant une direction par rapport à la série du dessous suivant la même direction.

Ainsi il est aussi possible de donner à la ligne de croisement de couches du dessus, une orientation différente de la direction de croisement de la ligne du dessous par exemple en disposant la pièce sur un support pivotant sous l'installation de placement de fibres.

L'invention et ses avantages apparaîtront avec plus de détails dans le cadre de la description qui suit avec des exemples de mise en oeuvre, donnés à titre illustratif et non limitatif, en référence aux figures annexées qui représentent :
- la figure 1, un exemple de revêtement de renforcement obtenu par le procédé conforme à l'invention et comportant deux couches superposées,
- la figure 2, un autre exemple de revêtement de renforcement obtenu par le procédé conforme à l'invention et comportant deux couches superposées,
- la figure 3, un autre exemple de revêtement de renforcement obtenu par le procédé conforme à l'invention et comportant deux couches superposées,
- la figure 4, un autre exemple de revêtement de renforcement obtenu par le procédé conforme à l'invention et comportant deux couches superposées,
- la figure 5, un autre exemple de revêtement de renforcement obtenu par le procédé conforme à l'invention et comportant deux couches superposées,
- la figure 6, un autre exemple de revêtement de renforcement obtenu par le procédé conforme à l'invention et comportant deux couches superposées,
- la figure 7, un autre exemple de revêtement de renforcement obtenu par le procédé conforme à l'invention et comportant deux couches entrelacées,
- la figure 8, un autre exemple de revêtement de renforcement obtenu par le procédé conforme à l'invention et comportant deux couches entrelacées,
- la figure 9, un autre exemple de revêtement de renforcement obtenu par le procédé conforme à l'invention et comportant deux couches entrelacées,
- la figure 10, un autre exemple de revêtement de renforcement obtenu par le procédé conforme à l'invention et comportant deux couches entrelacées,
- la figure 11, un autre exemple de revêtement de renforcement obtenu par le procédé conforme à l'invention et comportant deux couches entrelacées,
- la figure 12, un autre exemple de revêtement de renforcement obtenu par le procédé conforme à l'invention et comportant deux couches entrelacées de deux rubans au pas de 2,
- la figure 13, un autre exemple de revêtement de renforcement obtenu par le procédé conforme à l'invention et comportant deux couches entrelacées de quatre rubans au pas de 2,
- la figure 14, un exemple de réalisation d'une pale sur laquelle sera appliqué un revêtement de renforcement obtenu par le procédé conforme à l'invention,
- la figure 15, une pale sur laquelle est appliqué l'exemple de réalisation du revêtement de renforcement de la figure 1,
- la figure 16, une pale sur laquelle est appliqué l'exemple de réalisation du revêtement de renforcement de la figure 7,
- la figure 17, une pale sur laquelle est appliqué l'exemple de réalisation du revêtement de renforcement de la figure 20,
- la figure 18, une pale sur laquelle est appliqué l'exemple de réalisation du revêtement de renforcement de la figure 5,
- la figure 19, une pale sur laquelle est appliqué l'exemple de réalisation du revêtement de renforcement de la figure 10.
- la figure 20, un autre exemple de revêtement de renforcement obtenu par le procédé conforme à l'invention et comportant deux couches entrelacées,
- la figure 21, un autre exemple de revêtement de renforcement obtenu par le procédé conforme à l'invention et comportant deux couches entrelacées,
- la figure 22 un exemple de croisement pour définir le terme de couche superposées,
- La figure 23 un autre exemple de croisement pour définir le terme de couches superposées.
- la figure 24 un exemple de croisement pour définir le terme de couches entrelacées,
- la figure 25 un autre exemple de croisement pour définir le terme de couches entrelacées,
- et la figure 26 un logigramme pour définir les termes de couches superposées ou entrelacées.

Les éléments structurellement et fonctionnellement identiques, présents sur plusieurs figures distinctes sont affectés d'une seule et même référence numérique ou alphanumérique.

Le procédé conforme à l'invention consiste à piloter les séquences de dépose de rubans en déterminant la position, l'orientation et l'étendue des lignes de croisement de couches sur une surface. Le procédé conforme à l'invention permet ainsi de reproduire, de façon maîtrisée, différentes configurations de croisement de couches.

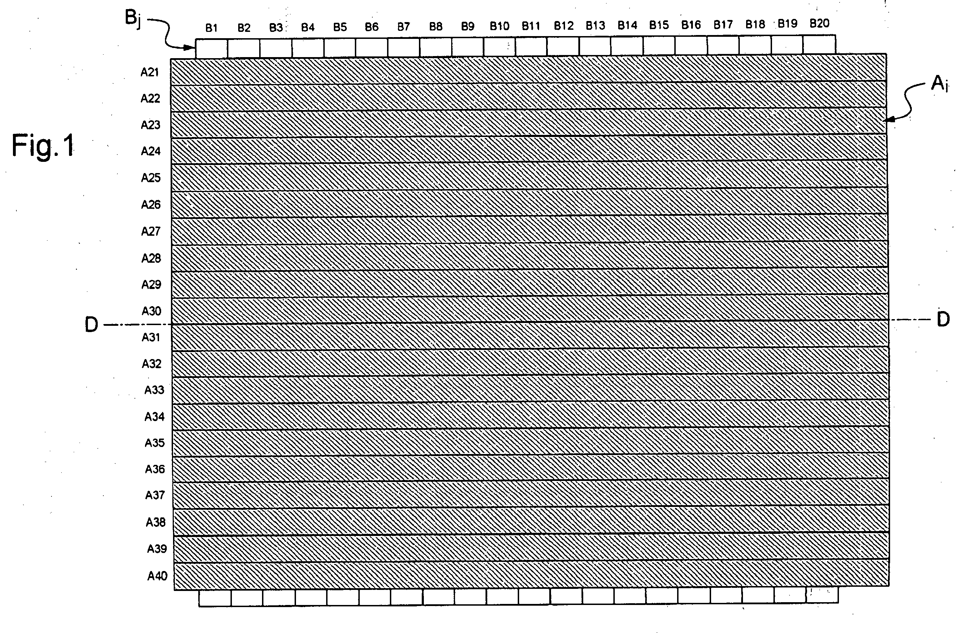

La figure 1 montre un exemple de revêtement de renforcement obtenu par le procédé conforme à l'invention. Ce dernier permet de maîtriser la position sur la surface et la géométrie des lignes de croisement de couches. Le revêtement comporte deux couches A et B superposées. Chaque couche A,B comporte des rubans Ai et Bj respectifs, i et j étant des nombres entiers. Les rubans Ai et Bj présentent un pas de 1 et sont orientés respectivement à 0° et 90° par rapport à une direction D. Les rubans A21 à A40 jointifs sont ainsi parallèles à la direction D en recouvrant les rubans B01 à B20 jointifs qui sont représentés de manière orthogonale à la direction D.

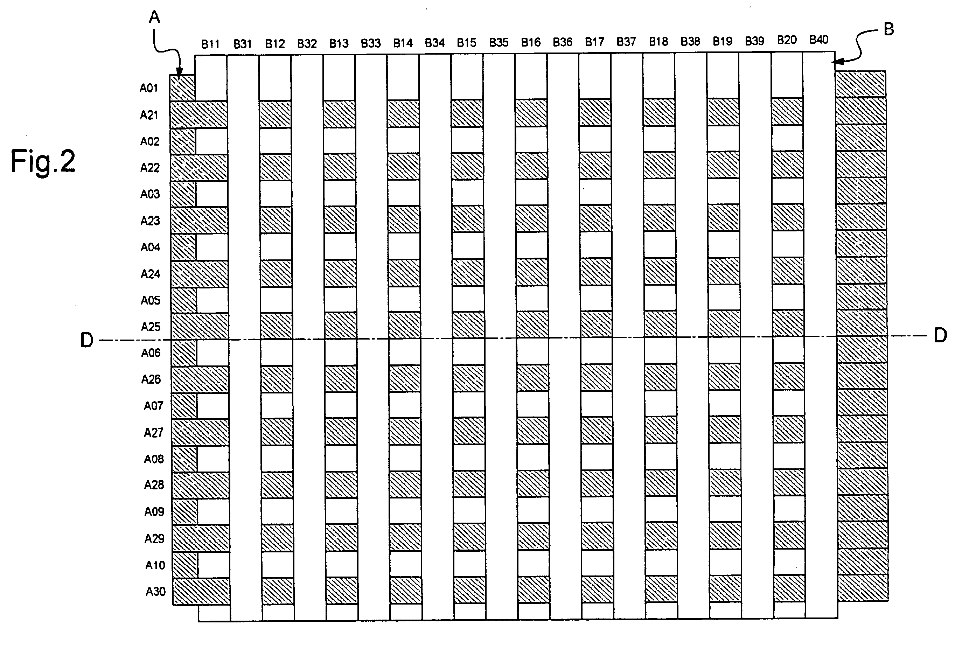

La figure 2 montre un autre exemple de revêtement de renforcement obtenu par le procédé conforme à l'invention et comportant deux couches A et B superposées avec un pas de 2. Chaque couche A, B comporte des rubans Ai et Bj respectifs, i et j étant des nombres entiers. Les rubans Ai et Bj présentent un pas de 2 et sont orientés respectivement à 0° et 90° par rapport à une direction D. Les rubans A1 à A10 disjoints par le pas égal à 2, sont ainsi parallèles à la direction D et placés lors d'une première dépose sur une pièce (non représentée). Les rubans B11 à B20 disjoints par le pas égal à 2, sont ensuite lors d'une seconde dépose, placés à 90° au dessus des rubans A01 à A10. Les rubans A21 à A30 disjoints par le pas égal à 2, parallèles à la direction D sont placés lors d'une troisième dépose sur la pièce (non représentée) au dessus des rubans déjà placés. Les rubans B01 à B20 disjoints par le pas égal à 2, sont ensuite lors d'une quatrième dépose, placés à 90° au dessus des rubans placés précédemment. On obtient ainsi dans son intégralité, le revêtement pré-imprégné.

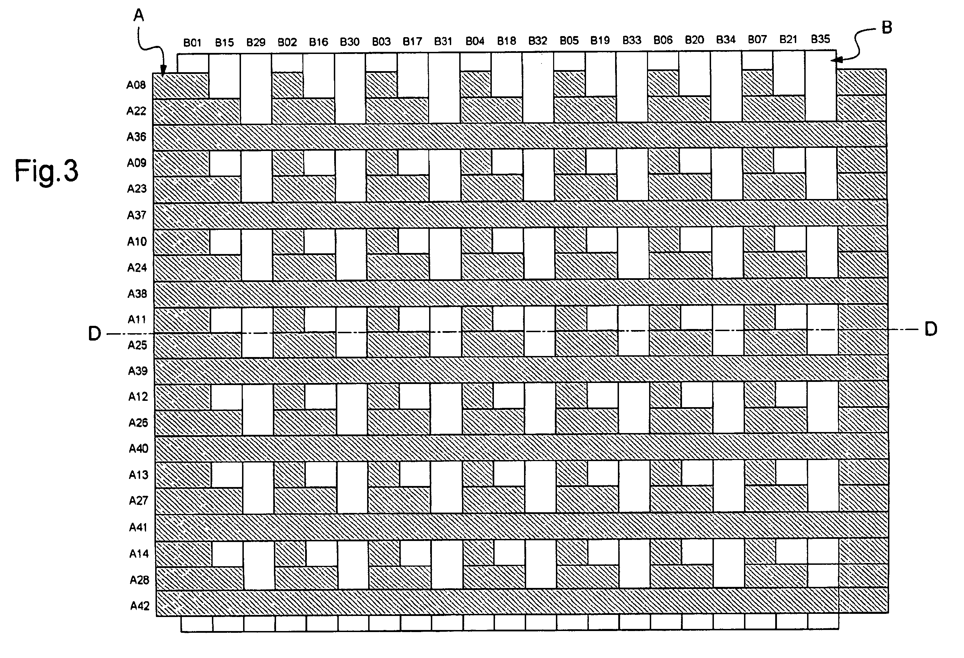

La figure 3 montre un autre exemple de revêtement de renforcement obtenu par le procédé conforme à l'invention et comportant deux couches A et B superposées avec un pas égal à 3. Ainsi, lors de déposes successives, on place :
- les rubans B01 à B07,
- les rubans A08 à A14,
- les rubans B15 à B21,
- les rubans A22 à A28,
- les rubans B29 à B35,
- et les rubans A36 à A42.

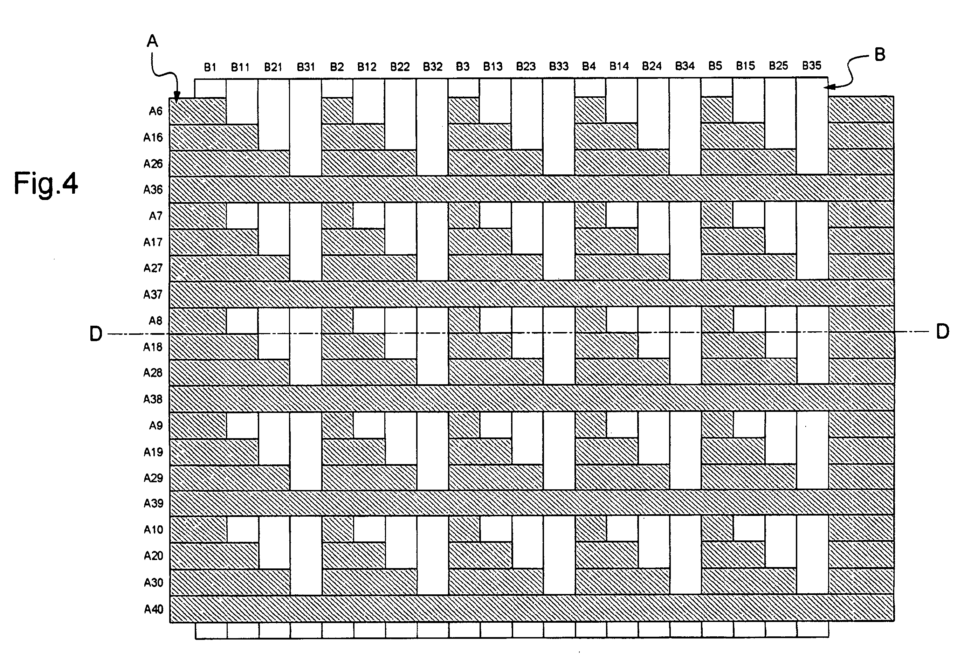

La figure 4, montre un autre exemple de revêtement de renforcement obtenu par le procédé conforme à l'invention et comportant deux couches A et B superposées avec un pas égal à 4. Ainsi, lors de déposes successives, on place :
- les rubans B1 à B5,
- les rubans A6 à A10,
- les rubans B11 à B15,
- les rubans A16 à A20,
- les rubans B21 à B25,
- les rubans A26 à A30,
- les rubans B31 à B35,
- et les rubans A36 à A40.

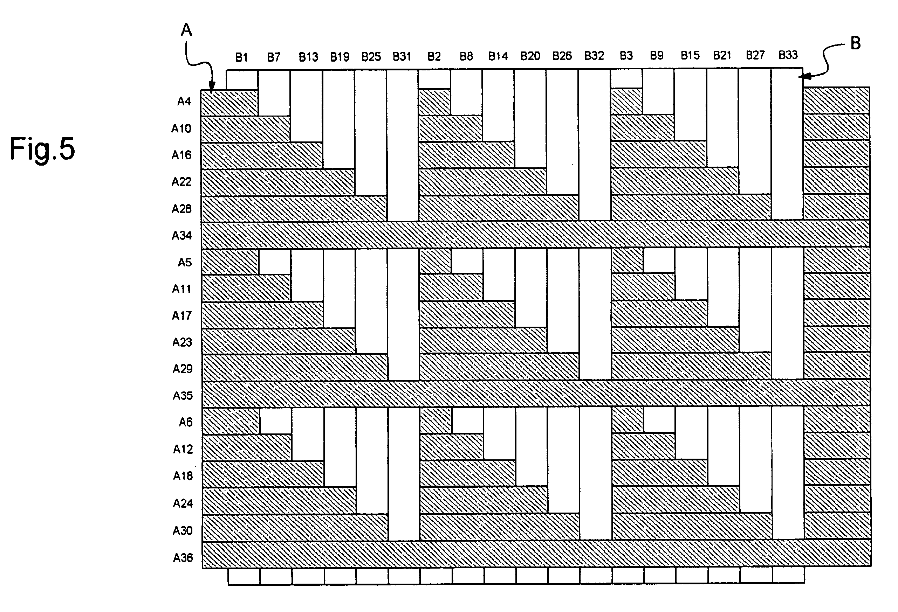

La figure 5 montre un autre exemple de revêtement de renforcement obtenu par le procédé conforme à l'invention et comportant deux couches A et B superposées avec un pas égal à 6. Ainsi, lors de déposes successives, on place :
- les rubans B1 à B3,
- les rubans A4 à A6,
- les rubans B7 à B9,
- les rubans A10 à A12,
- les rubans B13 à B15,
- les rubans A16 à A18,
- les rubans B19 à B21,
- les rubans A22 à A24,
- les rubans B25 à B27,
- les rubans A28 à A30,
- les rubans B31 à B33,
- et les rubans A34 à A36.

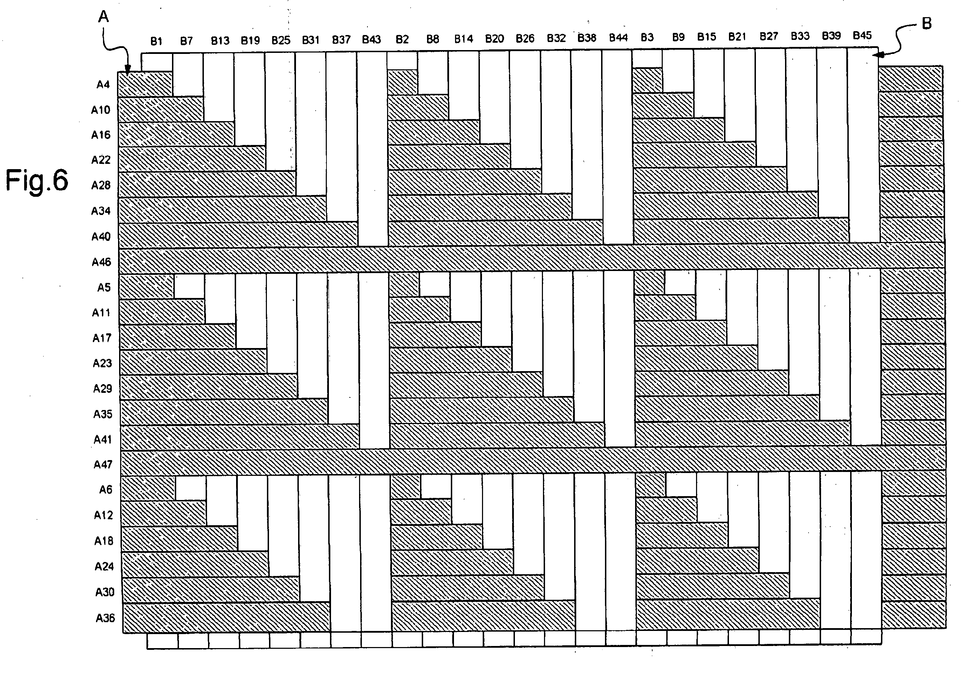

La figure 6 montre un autre exemple de revêtement de renforcement obtenu par le procédé conforme à l'invention et comportant deux couches superposées A et B avec un pas égal à 8. Ainsi, lors de déposes successives, on place :
- les rubans B1 à B3,
- les rubans A4 à A6,
- les rubans B7 à B9,
- les rubans A10 à A12,
- les rubans B13 à B15,
- les rubans A16 à A18,
- les rubans B19 à B21,
- les rubans A22 à A24,
- les rubans B25 à B27,
- les rubans A28 à A30,
- les rubans B31 à B33,
- les rubans A34 à A36,
- les rubans B37 à B39,
- les rubans A40 à A42,
- les rubans B43 à B45,
- et les rubans A46 à A48.

Tous les exemples de réalisation de couches superposées peuvent être réalisés par bobinage.

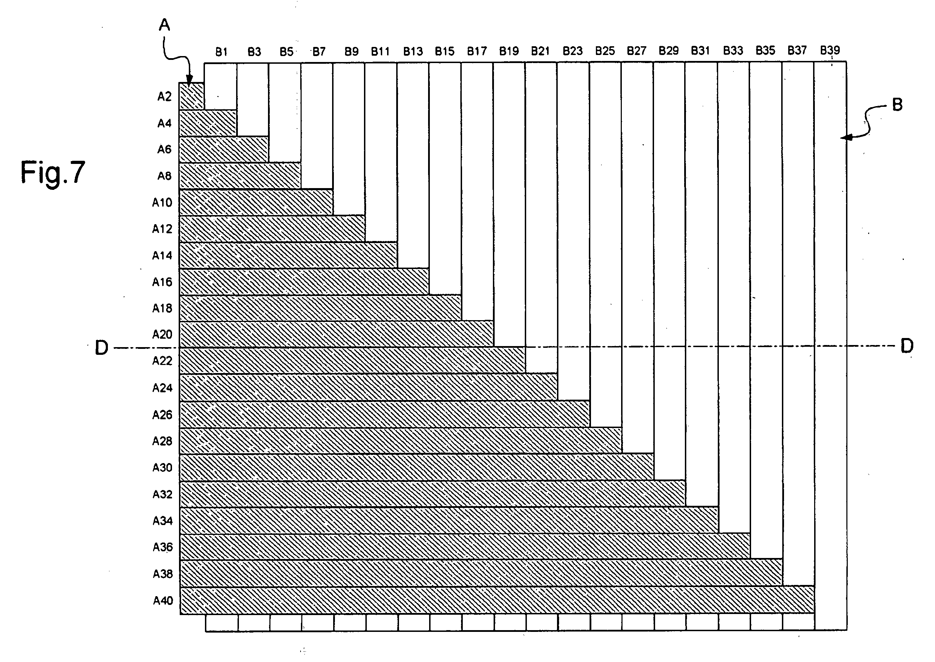

La figure 7 montre un autre exemple de revêtement de renforcement obtenu par le procédé conforme à l'invention et comportant deux couches A et B entrelacées, avec un pas égal à 1. Lors de déposes successives, on place le ruban A(2i), puis au dessus et en alternance le ruban B(2i-1), avec i un nombre entier allant de 1 à 20.

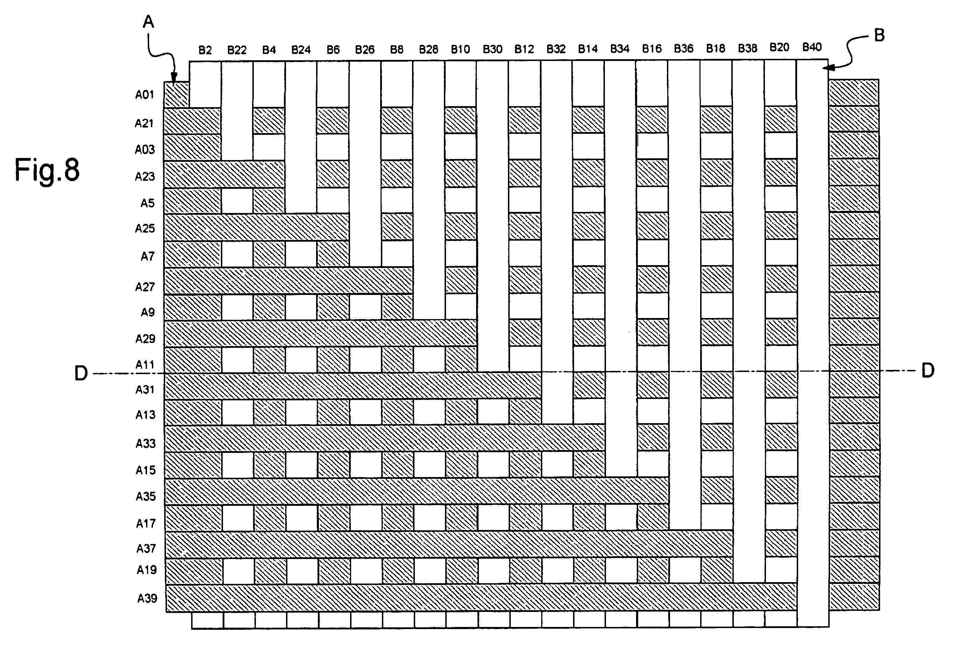

La figure 8, montre un autre exemple de revêtement de renforcement obtenu par le procédé conforme à l'invention et comportant deux couches A et B entrelacées, avec un pas égal à 2. Lors de déposes successives, on place le ruban A(2i-1), puis au dessus et en alternance le ruban B(2i), avec i un nombre entier allant de 1 à 20, incrémenté d'une unité par opération de dépose. Avec chaque incrémentation on place le ruban suivant, séparé du précédent du pas de 2 et ce pour chaque couche A et B.

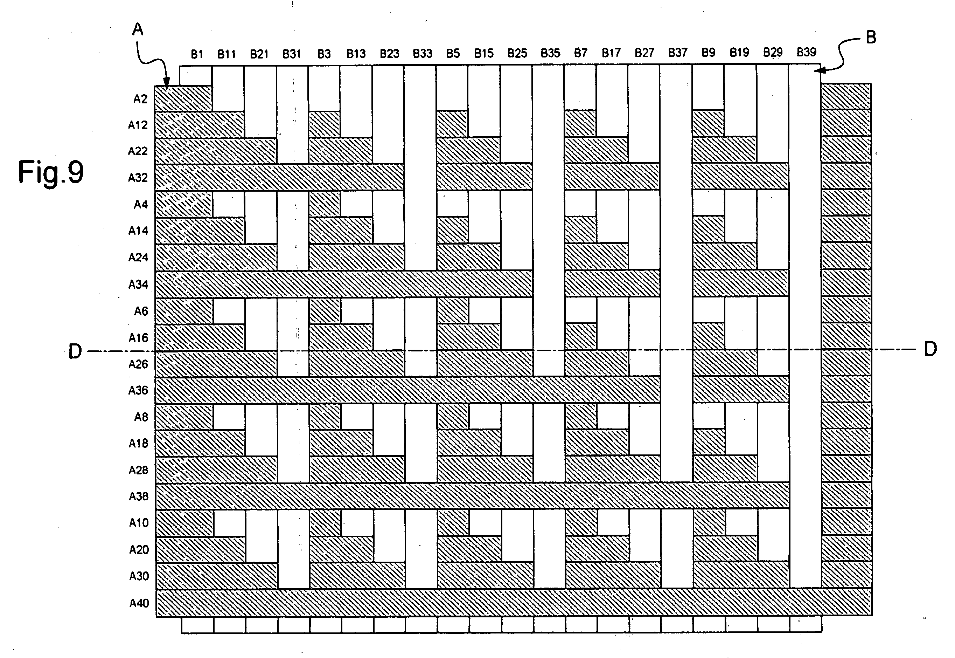

La figure 9 montre un autre exemple de revêtement de renforcement obtenu par le procédé conforme à l'invention et comportant deux couches A et B entrelacées, avec un pas égal à 4. Lors de déposes successives, on place le ruban B(2i-1), puis au dessus et en alternance le ruban A(2i), avec i un nombre entier allant de 1 à 20, incrémenté d'une unité par opération de dépose. Avec chaque incrémentation on place le ruban suivant, séparé du précédent du pas de 4 et ce pour chaque couche A et B

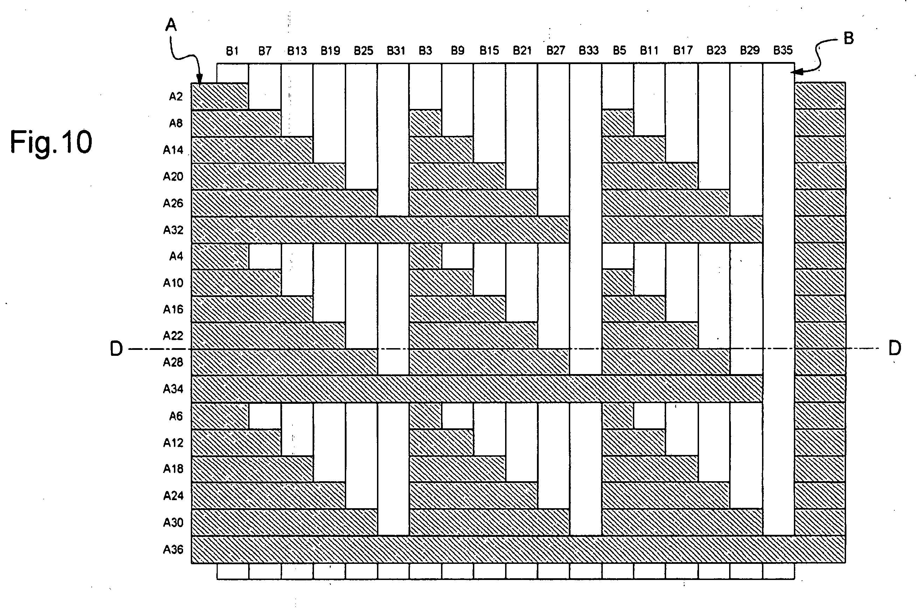

La figure 10 montre un autre exemple de revêtement de renforcement obtenu par le procédé conforme à l'invention et comportant deux couches A et B entrelacées, avec un pas égal à 6. Lors de déposes successives, on place le ruban B(2i-1), puis au dessus et en alternance le ruban A(2i), avec i un nombre entier allant de 1 à 20, incrémenté d'une unité par opération de dépose. Avec chaque incrémentation on place le ruban suivant, séparé du précédent du pas de 6 et ce pour chaque couche A et B.

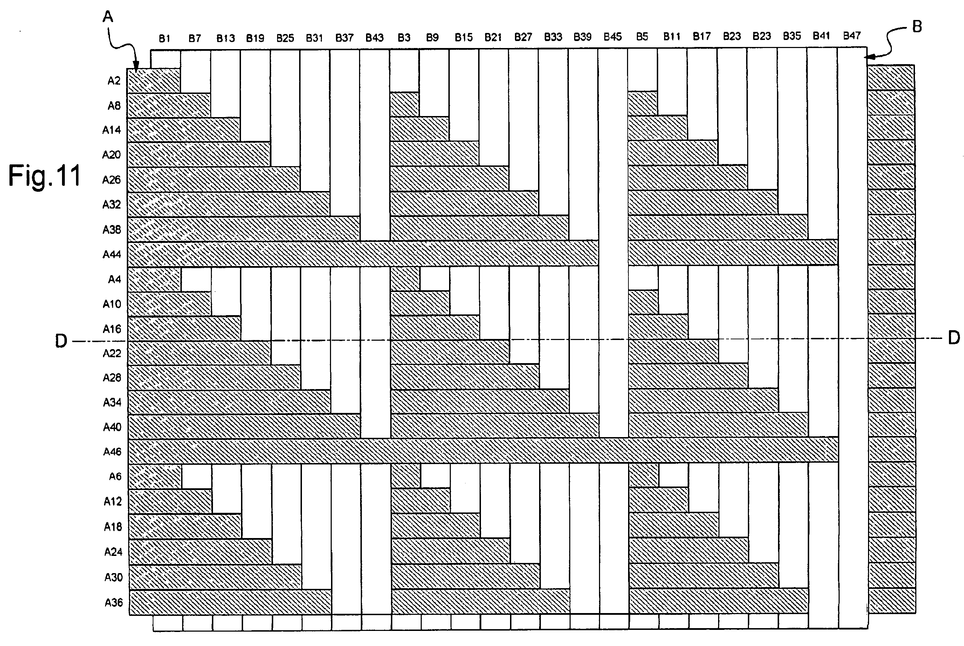

La figure 11 montre un autre exemple de revêtement de renforcement obtenu par le procédé conforme à l'invention et comportant deux couches A et B entrelacées, avec un pas égal à 8. Lors de déposes successives, on place le ruban B(2i-1), puis au dessus et en alternance le ruban A(2i), avec i un nombre entier allant de 1 à 20, incrémenté d'une unité par opération de dépose. Avec chaque incrémentation on place le ruban suivant, séparé du précédent du pas de 8 et ce pour chaque couche A et B.

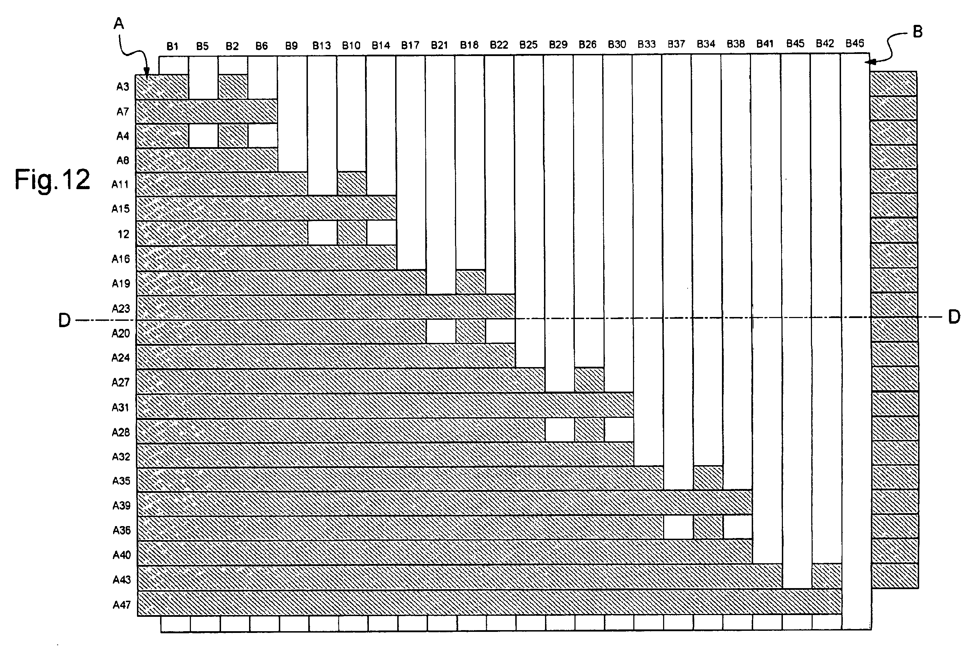

La figure 12 montre un autre exemple de revêtement de renforcement obtenu par le procédé conforme à l'invention et comportant deux couches A et B entrelacées de deux rubans simultanés, avec un pas de 2. Lors de déposes successives, on place simultanément les rubans B(2i-1) et B(2i), avec i un nombre entier impair allant de 1 à 23 et incrémenté de deux unités pour chaque dépose et au dessus et en alternance, on place simultanément les rubans A(2i-1) et A(2i), avec i un nombre entier pair allant de 2 à 20, incrémenté de deux unités par opération de dépose . Avec chaque incrémentation on place le ruban suivant, séparé du précédent du pas de 2 et ce pour chaque couche A et B.

Un tel revêtement est plutôt réalisable par placement de fibres ou par tressage de façon courante suivant l'état l'art.

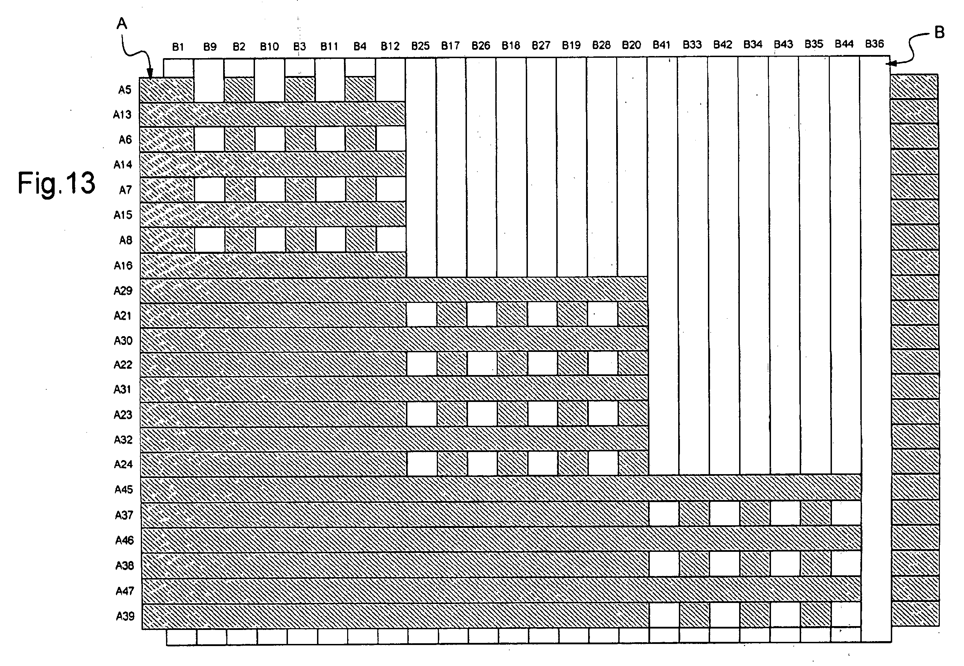

La figure 13 montre un autre exemple de revêtement de renforcement obtenu par le procédé conforme à l'invention et comportant deux couches A et B entrelacées de quatre rubans simultanés, avec un pas de 2. Lors de déposes successives, on place simultanément les rubans B1 à B4, séparés d'un pas de 2 et au dessus et en alternance, on place simultanément les rubans A5 à A8, séparés d'un pas de 2. Avec chaque dépose successive, on incrémente les rubans de la même couche placés précédemment de huit unités. Ainsi lors de la troisième dépose, on place simultanément les rubans B9 à B12 et lors de la quatrième dépose, on place simultanément les rubans A13 à A16.

Un tel revêtement est plutôt réalisable par placement de fibres ou par tressage de façon courante suivant l'état l'art.

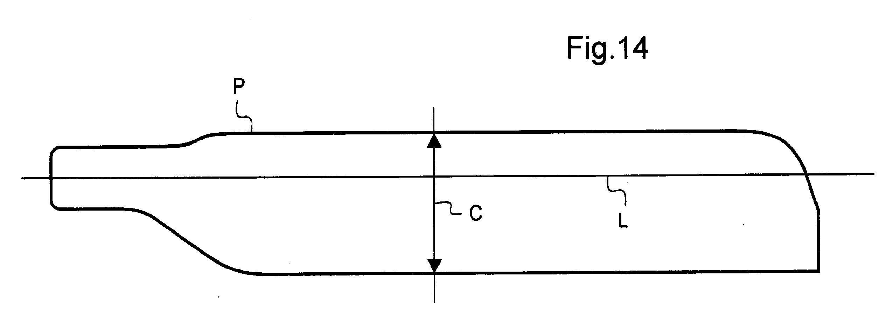

La figure 14 montre un exemple de réalisation d'une pale P présentant une direction longitudinale L et une corde C. Le procédé conforme à l'invention permet d'appliquer un revêtement de renforcement sur une telle pale P.

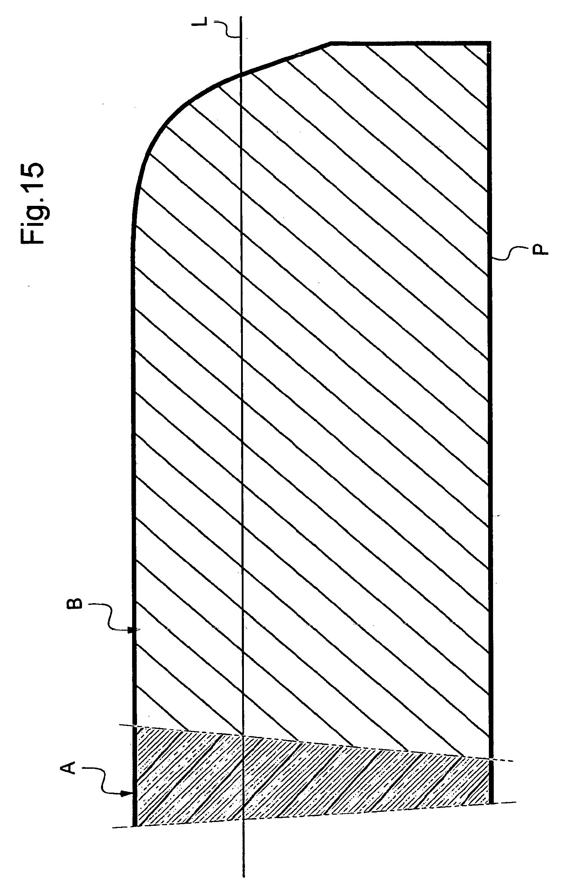

La figure 15, montre schématiquement la pale P sur laquelle est appliqué l'exemple de réalisation du revêtement de renforcement de la figure 1. Les rubans des couches A et B sont inclinés de 45° par rapport à la direction longitudinale L de la pale P. Un tel revêtement est réalisable par placement de fibres et par bobinage. Dans ce cas, comme pour tous les croisements de couches de type superposées, le placement de fibres produit un résultat comparable à celui obtenu par bobinage.

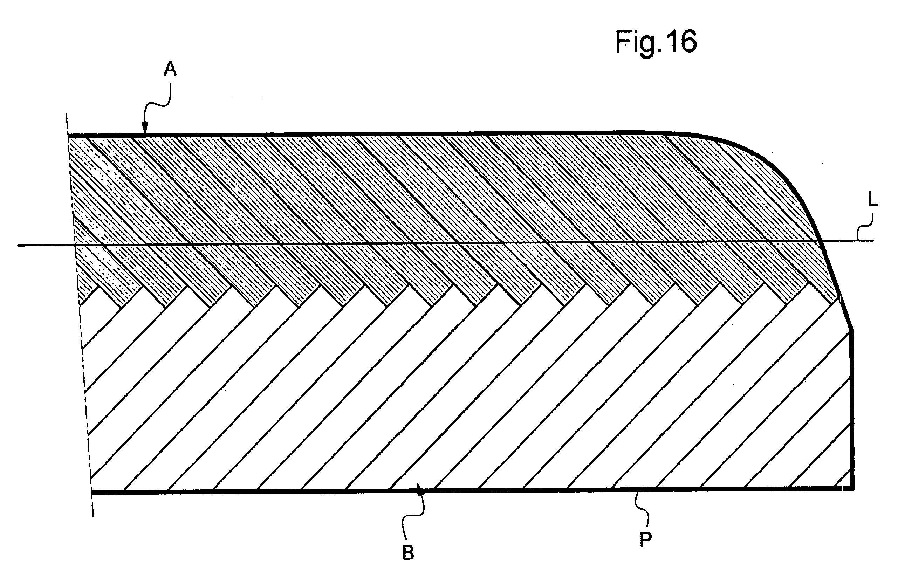

La figure 16 montre la pale P sur laquelle est appliqué l'exemple de réalisation du revêtement de renforcement de la figure 7. Les rubans des couches A et B sont inclinés à +/-45° par rapport à la direction longitudinale L. En outre la raideur dans la zone du caisson du bord d'attaque de la pale P n'est pas dégradée par les changements de couches si la ligne de croisement des couches ne le chevauche pas. En effet les fibres ne sont pas perturbées par les croisements de couches et gardent leurs caractéristiques mécaniques intégrales.

Un tel revêtement est plutôt réalisable par placement de fibres ou par tressage de façon courante suivant l'état l'art.

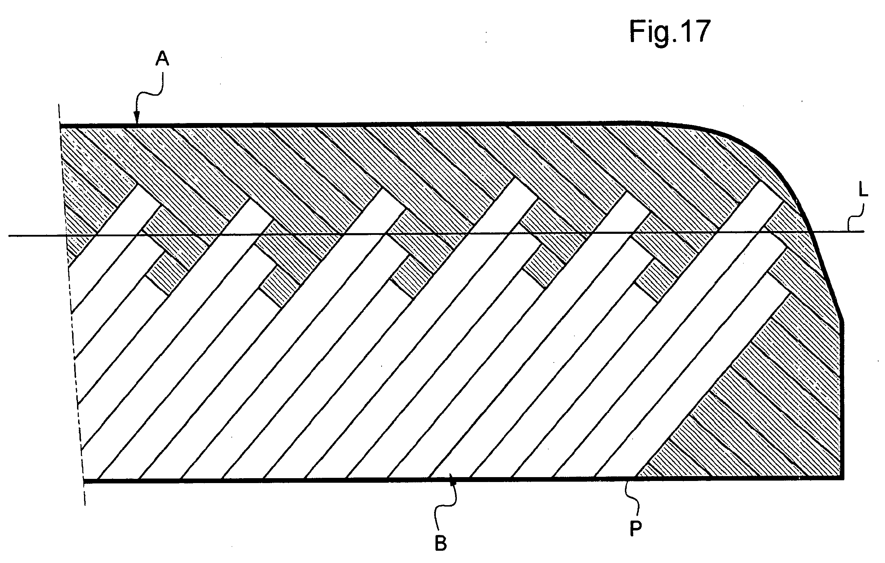

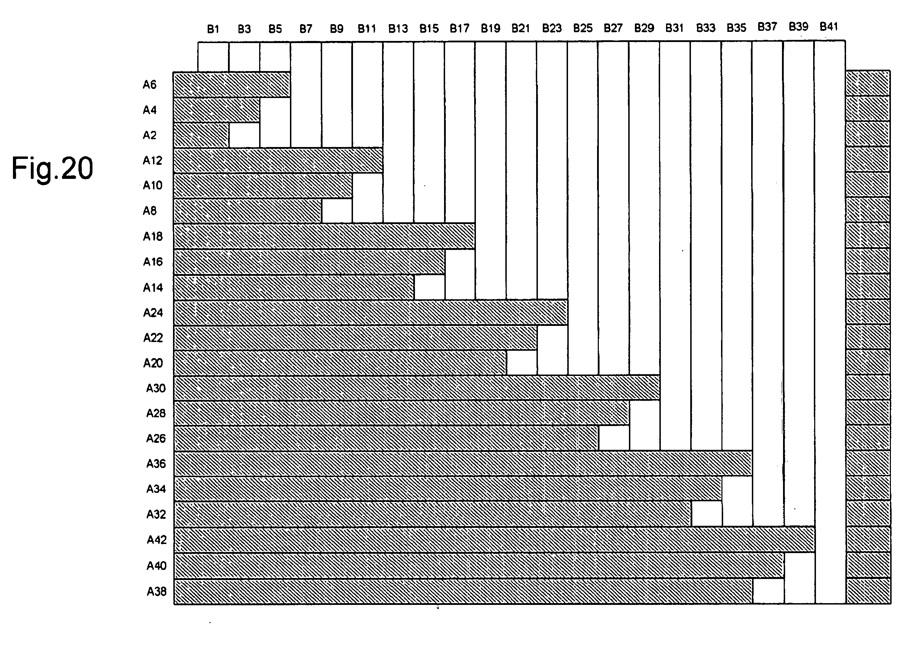

La figure 17 montre la pale P sur laquelle est appliqué l'exemple de réalisation du revêtement de renforcement comportant deux couches entrelacées au pas de 3 suivant la figure 20. Les rubans des couches A et B sont inclinés à +/-45° par rapport à la direction longitudinale L.

Un tel revêtement est plutôt réalisable par placement de fibres ou par tressage de façon courante suivant l'état l'art.

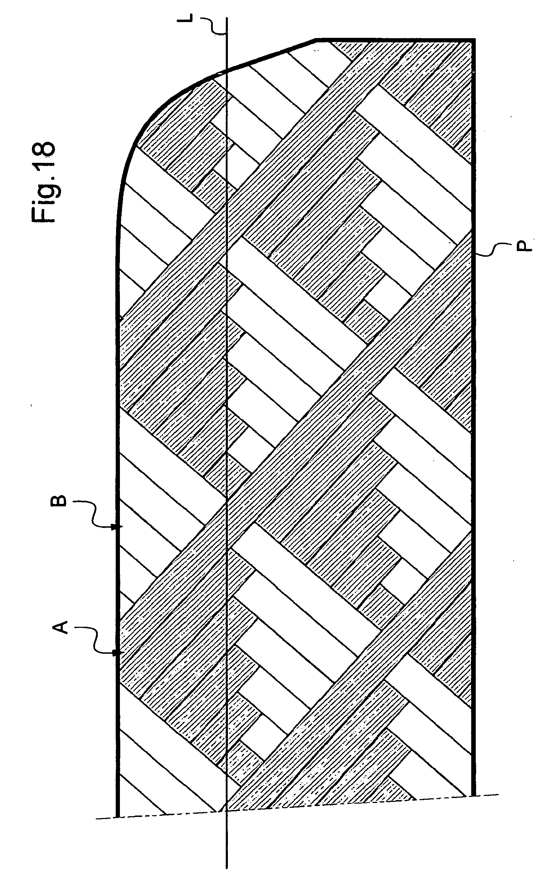

La figure 18 montre la pale P sur laquelle est appliqué l'exemple de réalisation du revêtement de renforcement de la figure 5. Les rubans des couches A et B sont inclinés à +/-45° par rapport à la direction longitudinale L. Un tel revêtement est réalisable par placement de fibres ou par bobinage.

A titre d'exemple, lorsqu'on utilise un mandrin de bobinage, on peut aussi parler de placement de fibres si les fibres sont plaquées sur le mandrin par l'effet d'une tête de dépose.

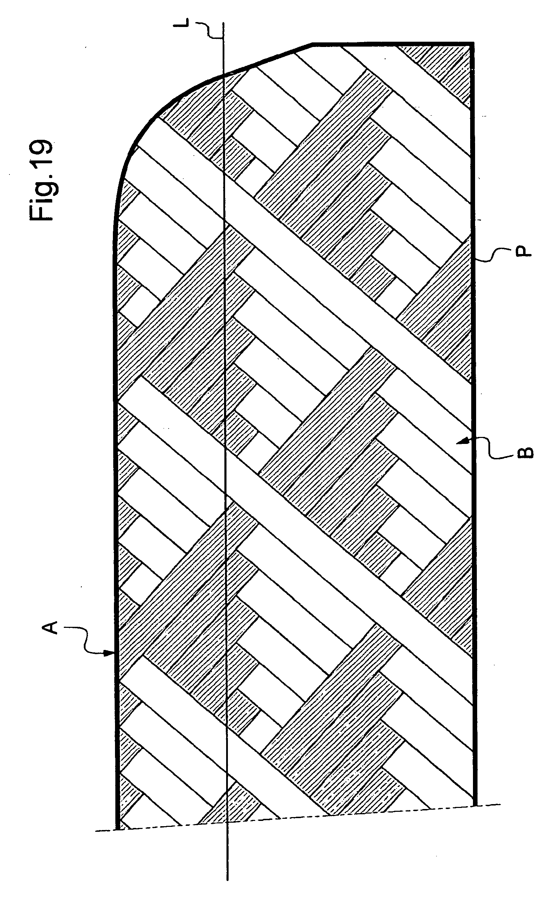

La figure 19 montre la pale P sur laquelle est appliqué l'exemple de réalisation du revêtement de renforcement entrelacé de la figure 10. Les rubans des couches A et B sont inclinés à +/-45° par rapport à la direction longitudinale L.

Un tel revêtement est plutôt réalisable par placement de fibres ou par tressage de façon courante suivant l'état l'art.

La figure 20 illustre un autre exemple de revêtement de renforcement obtenu par le procédé conforme à l'invention et comportant deux couches entrelacées.

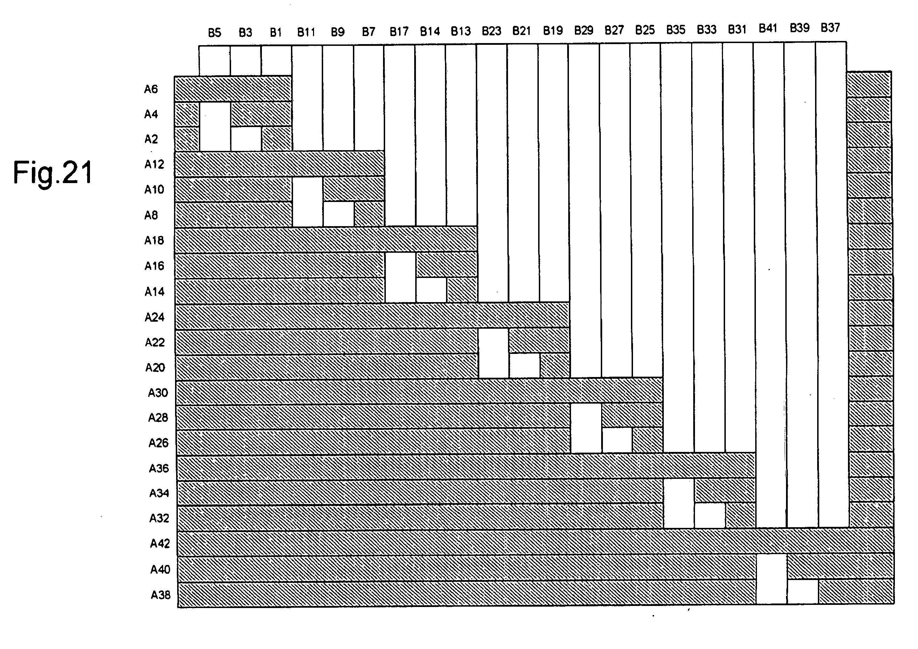

La figure 21 illustre un autre exemple de revêtement de renforcement obtenu par le procédé conforme à l'invention et comportant deux couches entrelacées.

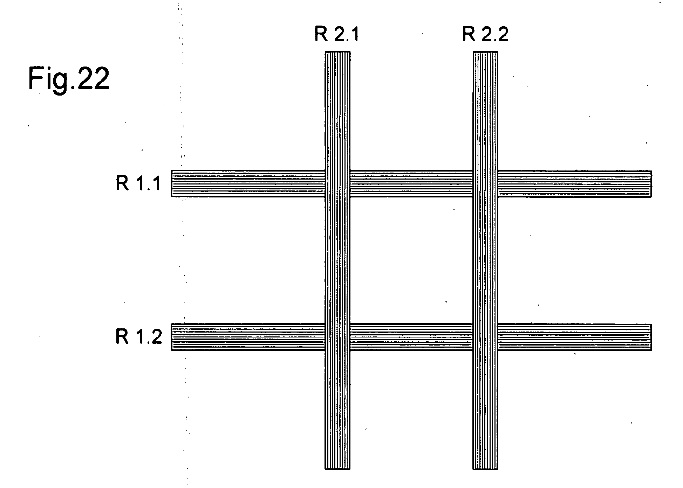

La figure 22 est un exemple de croisement illustrant la définition des termes «couches superposées».

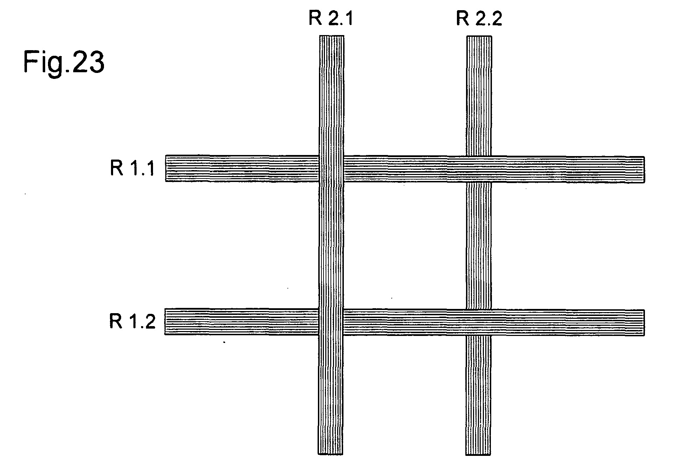

La figure 23 est un autre exemple de croisement pour illustrer la définition des termes «couches superposées».

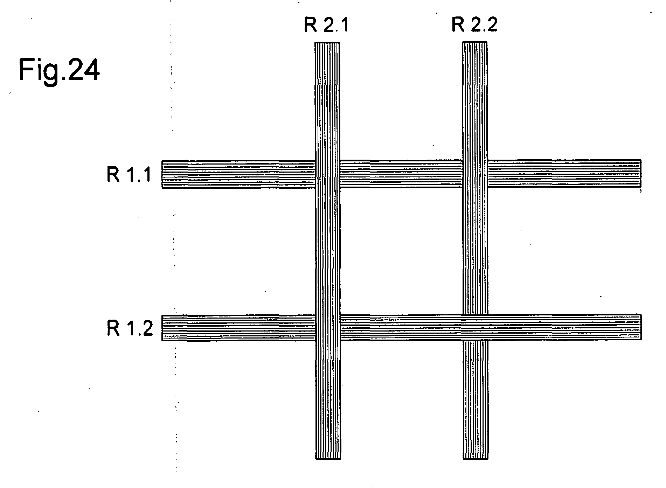

La figure 24 est un exemple de croisement pour illustrer la définition des termes «couches entrelacées».

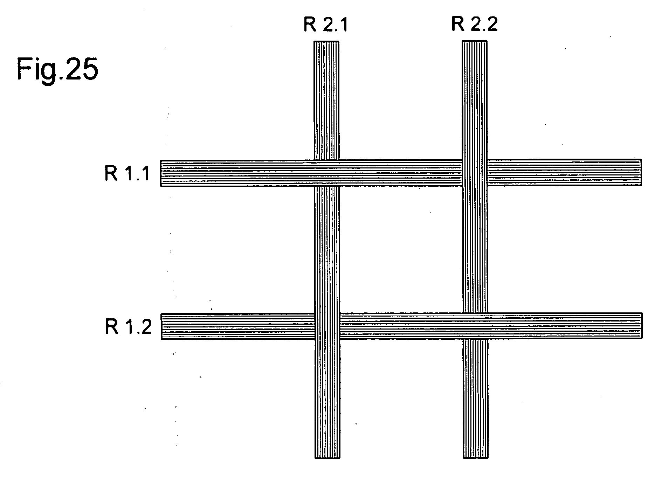

La figure 25 est un autre exemple de croisement pour illustrer la définition des termes «couches entrelacées».

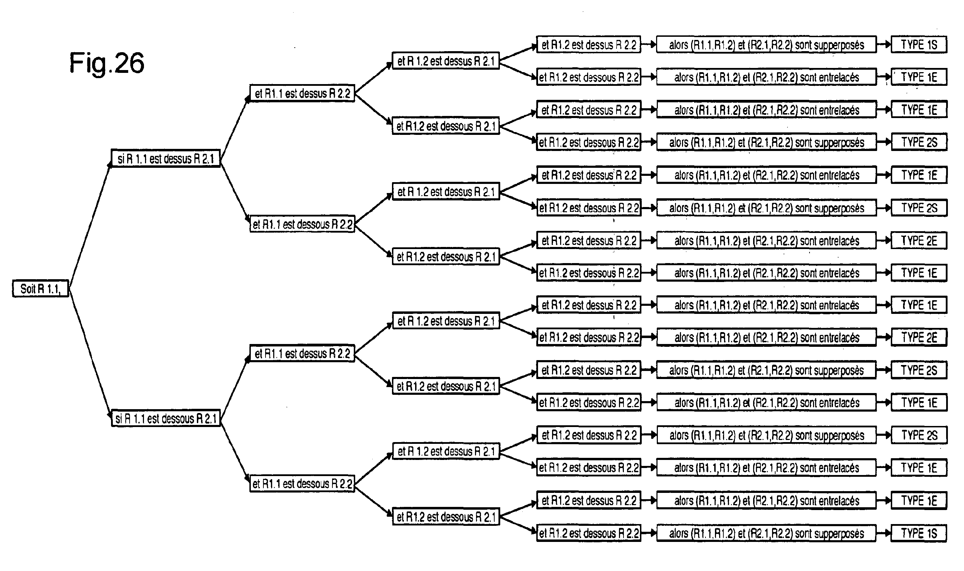

La figure 26 représente un logigramme permettant aussi de définir les termes «couches superposées ou entrelacées». Par définition, un ruban Ru.v dessus Ri.j signifie que le ruban Ru.v croise le ruban Ri.j en passant au-dessus de Ri.j. Par définition, un ruban Ru.v dessous Ri.j signifie que le ruban Ru.v croise le ruban Ri.j en passant en-dessous de Ri.j.

On peut ainsi illustrer la définition de configurations de couches superposées.

Soit une surface S couverte complètement ou partiellement par 2 groupes G1 et G2 de renforts de rubans, mèches ou autres assimilables. Le groupe G1 est constitué d'au moins 2 mèches ou rubans R1.1 et R1.2 distincts alignés et parallèles, jointifs ou non jointifs disposés suivant une direction commune D1. Le groupe G2 est constitué d'au moins 2 mèches ou rubans R2.1 et R2.2 distincts alignés et parallèles, jointifs ou non jointifs disposés suivant une direction commune D2.

D1 et D2 forment un angle non nul, et préférablement égal à 90° dans le cadre de cette description.

Si, après avoir observé que par exemple R2.1 croisse et passe au dessus de R1.1 et au dessus de R1.2, on observe que par exemple R2.2 croise et passe au dessus de R1.1 et aussi croise et passe au dessus de R1.2, alors les 2 groupes de mèches, R1.1, R1.2 d'une part et R2.1, R2.2 d'autre part sont dit superposés.

Afin de généraliser la définition précédente à toutes les configurations de croisement de 2 groupes de 2 mèches il est proposé le logigramme de la figure 26 basé sur l'observation des figures 22 et 23.

Les 2 groupes G1 et G2 seront par extension constitués de couches dites superposées si la condition décrite ci-avant est vérifiée pour tous les groupes de 4 mèches du même type que R1.1, R1.2, R2.1, R2.2 identifiables dans l'épaisseur des renforts couvrant la surface S.

Ces configurations de croisements de mèches Type 1S et 2S sont notamment réalisables par un procédé de bobinage ou par procédé de placement de fibres.

On peut aussi illustrer la définition de configurations de couches entrelacées.

Soit une surface S couverte complètement ou partiellement par 2 groupes G1 et G2 de renforts de rubans, mèches ou autres assimilables. Le groupe G1 est constitué d'au moins 2 mèches ou rubans R1.1 et R1.2 distincts alignés et parallèles, jointifs ou non jointifs disposés suivant une direction commune D1. Le groupe G2 est constitué d'au moins 2 mèches ou rubans R2.1 et R2.2 distincts alignés et parallèles, jointifs ou non jointifs disposés suivant une direction commune D2.

D1 et D2 forment un angle non nul, et préférablement égal à 90° dans le cadre de cette description.

Si, après avoir observé que par exemple R2.1 croisse et passe au dessus de R1.1 et croise et passe au dessus de R1.2, on observe que par exemple R2.2 croise et passe au dessus de R1.1 puis croise et passe au dessous de R1.2, alors les 2 groupes de mèches, R1.1, R1.2 d'une part et R2.1, R2.2 d'autre part sont dit entrelacés.

Les deux groupes G1 et G2 seront par extension constitués de couches dites entrelacées si la conditions décrite ci-avant est vérifiée pour l'ensemble des groupes de 4 mèches du même type que R1.1, R1.2, R2.1, R2.2 identifiables dans l'épaisseur des renforts couvrant la surface S.

Afin de généraliser les définitions précédentes à toutes les configurations de croisement de 2 groupes de 2 mèches il est proposé le logigramme de la figure 26 basé sur l'observation des figures 24 et 25.

Les configurations de croisements de mèches entrelacées de type 1 E sont notamment réalisables par un bobinage ou par un placement de fibres.

Les configurations de croisements de mèches entrelacées de type 2E ne sont pas réalisables par un procédé de bobinage ou de placement de fibres, mais plutôt par des procédés tels que le tissage ou le tressage qui sont connus en tant que tels et ne sont pas détaillés dans la présente description.

Naturellement, la présente invention est sujette à de nombreuses variations quant à sa mise en oeuvre. Bien que plusieurs modes de réalisations et/ou de mise en oeuvre aient été décrits, on comprend bien qu'il n'est pas concevable d'identifier de manière exhaustive tous les modes possibles. Il est bien sûr envisageable de remplacer un moyen décrit ou une étape décrite par un moyen équivalent ou une étape équivalente, sans sortir du cadre de la présente invention, telle que définie par les revendications.

## Revendications

1. Procédé de fabrication d'un revêtement de renforcement pour une pièce (P) en matériaux composites, ce procédé prévoyant d'utiliser des fibres de renforcement sèches ou pré-imprégnées sous forme de rubans (Ai, Bi), de déposer lesdits rubans (Ai, Bi) en couches (A, B) par placement sur un corps solide à couvrir en renforcement de la pièce (P), en utilisant deux couches (A, B) de rubans longitudinaux, en localisant une partie d'origine du corps solide qui est constitutive de l'origine de dépose des rubans, en déterminant des directions de placement des rubans (Ai, Bi) par rapport à une direction déterminée (D) du corps solide en déterminant un ordre de dépose de chacun des rubans (Ai, Bi) suivant chacune des directions de placement afin de définir au moins une direction de croisement d'au moins une ligne de croisement des rubans (Ai, Bi), en déterminant un nombre d'opérations de dépose pour les deux couches (A, B) avec un nombre prédéfini de rubans (Ai, Bi) par opération de dépose, un pas des rubans (Ai, Bi) déposés avec chaque opération de dépose, puis en superposant ou entrelaçant les rubans de deux opérations de dépose successives pour constituer les deux couches (A, B) sous forme d'au moins un motif particulier ;
**caractérisé par** une orientation angulaire des rubans (Ai, Bi) de chaque couche (A, B), respectivement de 0° et autre angle non nul par rapport à ladite direction (D) déterminée du corps solide, et en ce que un type de motifs entrelacés est choisi pour donner des lignes de croisements de couches parallèles à une direction (L) longitudinale du corps solide, en formant des motifs entrelacés qui limitent à une seule, le nombre de lignes de croisement de couches (A, B) suivant ladite direction (L) longitudinale du corps solide, les orientations angulaires des rubans (Ai, Bi) de chaque couche (A, B) étant complémentaires entre 0° et 90°, pour une reprise d'efforts centrifuges et d'efforts de flexion dudit corps solide.

2. Procédé selon la revendication 1,
**caractérisé en ce que** les rubans (Ai, Bi) ou mèches sont de largeur comprise entre 6.35mm et 100mm, d'épaisseur comprise entre 0.2mm et 0.4 mm et de longueur comprise entre 100mm et 1000mm.

3. Procédé selon la revendication 1,
**caractérisé en ce que** ce procédé prévoit pour réaliser les rubans (Ai, Bi) d'utiliser des bandes, mèches ou fibres sèches ou pré imprégnées, de verre, aramide, basalte, carbone, ou en fibres naturelles de lin, chanvre, coton, soie.

4. Procédé selon la revendication 1,
**caractérisé en ce que** ce procédé prévoit de localiser la partie d'origine du corps solide et donc de la pièce (P), ladite partie d'origine constituant l'origine pour les opérations de dépose dans un plan de douilles de brochage de ce corps solide, et sur la ligne de vrillage de ce corps solide et donc de la pièce (P).

5. Procédé selon la revendication 1,
**caractérisé en ce que** ce procédé prévoit de superposer les rubans (Ai, Bi) des deux couches (A, B) en choisissant un pas égal à un nombre, entier ou non, déterminé de largeur de rubans (Ai, Bi).

6. Procédé selon la revendication 1,
**caractérisé en ce que** ce procédé prévoit d'entrelacer les rubans (Ai, Bi) des deux couches (A, B) en choisissant un pas égal à un nombre entier déterminé de largeur de rubans (Ai, Bi).

7. Procédé selon la revendication 1,
**caractérisé en ce que** ce procédé prévoit d'entrelacer simultanément un nombre « x » de rubans (Ai) de la première couche (A) avec un nombre « x » de rubans (Bi) de la seconde couche (B), lesdits rubans (Ai, Bi) de la première et de la seconde couche (A, B) présentant un pas égal à un nombre « y ».

8. Procédé selon la revendication 7,
**caractérisé en ce que** ce procédé prévoit d'entrelacer simultanément quatre rubans (Ai) de la première couche (A) avec quatre rubans (Bi) de la seconde couche (B), lesdits rubans (Ai, Bi) présentant un pas égal à 2.

9. Procédé selon la revendication 1,
**caractérisé en ce que** ce procédé prévoit d'utiliser une orientation angulaire des rubans (Ai, Bi) de chaque couche (A, B), respectivement de +/- 45° par rapport à ladite direction longitudinale (L) du corps solide et donc de la pièce (P).

10. Procédé selon la revendication 1,
**caractérisé en ce que** ce procédé prévoit d'utiliser une orientation angulaire des rubans (Ai, Bi) de chaque couche (A, B), respectivement de 0° et 90° par rapport à ladite direction longitudinale (L) du corps solide et donc de la pièce.

11. Procédé selon la revendication 1,
**caractérisé en ce que** ce procédé prévoit de positionner ladite unique ligne de croisement de couches (A, B) suivant une direction longitudinale (L) perpendiculaire à une corde ( C ) du corps solide.

12. Procédé selon la revendication 1,
**caractérisé en ce que** ce procédé prévoit de choisir pour des revêtements de renforcement, des motifs avec des lignes de croisements de plusieurs couples de couches (A, B) qui sont volontairement décalées, parallèles ou non, entre elles, afin de limiter les pertes de résistance en raideur sur ces revêtements de renforcement de la pièce (P) en matériaux composites.

13. Pièce (P) en matériau composite comportant un revêtement renforcé fabriqué selon le procédé conforme à l'une des revendications 1 à 12.

14. Pièce (P) selon la revendication 13, **caractérisée en ce que** cette pièce (P) est une pale pour rotor principal d'un giravion ou d'un hélicoptère.

15. Pièce (P) selon la revendication 13, **caractérisée en ce que** cette pièce (P) est une pale pour rotor anti-couple d'un giravion ou d'un hélicoptère.

16. Pièce (P) selon la revendication 13, **caractérisée en ce que** cette pièce (P) est une pale pour hélice motrice d'aéronef.

## Patentansprüche

1. Verfahren zur Herstellung einer Verkleidung zur Verstärkung eines Teils (P) aus Verbundwerkstoffen, wobei dieses Verfahren vorsieht, trockene oder vorimprägnierte Verstärkungsfasern in Form von Bändern (Ai, Bi) zu verwenden, diese Bändern (Ai, Bi) in Schichten (A, B) aufzubringen durch Anordnung auf einem festen, zur Verstärkung zu bedeckenden Körper des Teils (P), indem zwei Schichten (A, B) länglicher Bänder verwendet werden, ein ursprünglicher Teil des festen Körpers, der den Ursprung der Aufbringung der Bänder bildet, lokalisiert wird, indem Anordnungsrichtungen von Bändern (Ai, Bi) relativ zu einer vorbestimmten Richtung (D) des festen Körpers bestimmt werden, indem eine Aufbringungsreihenfolge eines jeden der Bänder (Ai, Bi), gemäß jeder der Anordnungsrichtungen, bestimmt wird, um mindestens eine Kreuzungsrichtung mindestens einer Kreuzungslinie der Bänder (Ai, Bi) zu definieren, indem eine Anzahl von Aufbringungsschritten für die beiden Schichten (A, B) mit einer vorbestimmten Anzahl von Bändern (Ai, Bi) pro Aufbringungsschritt bestimmt wird, wobei eine Anzahl von Bändern (Ai, Bi) mit jedem Aufbringungsschritt aufgebracht wird, und indem anschließend die Bänder von zwei aufeinanderfolgenden Aufbringungsschritten übereinandergelegt oder verflochten werden, um zwei Schichten (A, B) in Form mindestens eines besonderen Musters zu bilden, **gekennzeichnet durch** eine Winkelausrichtung von Bändern (Ai, Bi) einer jeden Schicht (A, B) von jeweils 0° und mit einem anderen Winkel ungleich Null relativ zu der bestimmten Richtung (D) des festen Körpers, und **dadurch**, dass eine Art von Flechtmustern gewählt wird, um Kreuzungslinien von zu einer Längsrichtung (L) des festen Körpers parallelen Schichten zu erzeugen, indem Flechtmuster gebildet werden, die die Anzahl der Kreuzungslinien der Schichten (A, B) entlang der Längsrichtung (L) des festen Körpers auf eine einzige begrenzen, wobei die Winkelausrichtungen von Bändern (Ai, Bi) jeder Schicht (A, B) zwischen 0° und 90° komplementär sind, um Zentrifugalkräfte und Biegekräfte des festen Körpers aufzunehmen.

2. Verfahren nach Anspruch 1,
**dadurch gekennzeichnet, dass** die Bänder (Ai, Bi) oder Schnüre eine Breite zwischen 6,35 mm und 100 mm, eine Dicke zwischen 0,2 mm und 0,4 mm und eine Länge zwischen 100 mm und 1000 mm aufweisen.

3. Verfahren nach Anspruch 1,
**dadurch gekennzeichnet, dass** das Verfahren vorsieht, zur Erzeugung der Bänder (Ai, Bi) Streifen, Schnüre oder trockene oder vorimprägnierte Fasern aus Glas, Aramid, Basalt oder Kohlenstoff oder aus Naturfasern aus Leinen, Hanf, Baumwolle oder Seide zu verwenden.

4. Verfahren nach Anspruch 1,
**dadurch gekennzeichnet, dass** das Verfahren vorsieht, den Ursprungsteil des festen Körpers und somit des Teils (P) zu lokalisieren, wobei der Ursprungsteil den Anfang der Aufbringungsschritte in einer Ebene von Steckhülsen des festen Körpers und auf der Verdrehlinie des festen Körpers und somit des Teils (P) bildet.

5. Verfahren nach Anspruch 1,
**dadurch gekennzeichnet, dass** das Verfahren vorsieht, Bänder (Ai, Bi) zweier Schichten (A, B) übereinanderzulegen, indem eine Anzahl gewählt wird, die gleich einer ganzen oder nicht ganzen Zahl ist, die aus der Breite der Bänder (Ai, Bi) bestimmt wird.

6. Verfahren nach Anspruch 1,
**dadurch gekennzeichnet, dass** das Verfahren vorsieht, die Bänder (Ai, Bi) zweier Schichten (A, B) zu verflechten, indem eine Anzahl gewählt wird, die gleich einer ganzen Zahl ist, die aus der Breite der Bänder (Ai, Bi) bestimmt ist.

7. Verfahren nach Anspruch 1,
**dadurch gekennzeichnet, dass** das Verfahren vorsieht, gleichzeitig eine Anzahl "x" von Bändern (Ai) der ersten Schicht (A) mit einer Anzahl "x" von Bändern (Bi) der zweiten Schicht (B) zu verflechten, wobei die Bänder (Ai, Bi) der ersten und der zweiten Schicht (A, B) eine Anzahl bilden, die gleich einer Zahl "y" ist.

8. Verfahren nach Anspruch 7,
**dadurch gekennzeichnet, dass** das Verfahren vorsieht, gleichzeitig vier Bänder (Ai) der ersten Schicht (A) mit vier Bändern (Bi) der zweiten Schicht (B) zu verflechten, wobei die Bänder (Ai, Bi) eine Anzahl gleich 2 aufweisen.

9. Verfahren nach Anspruch 1,
**dadurch gekennzeichnet, dass** das Verfahren vorsieht, eine Winkelausrichtung von Bändern (Ai, Bi) einer jeden Schicht (A, B) von jeweils ±45° bezüglich der Längsrichtung (L) des festen Körpers und somit des Teils (P) zu verwenden.

10. Verfahren nach Anspruch 1,
**dadurch gekennzeichnet, dass** das Verfahren vorsieht, eine Winkelausrichtung von Bändern (Ai, Bi) einer jeden Schicht (A, B) von jeweils 0 bzw. 90° bezüglich der Längsrichtung (L) des festen Körpers und somit des Teils zu verwenden.

11. Verfahren nach Anspruch 1,
**dadurch gekennzeichnet, dass** das Verfahren vorsieht, die einzige Kreuzungslinie der Schichten (A, B) entlang einer Längsrichtung (L) senkrecht zu einer Breite (C) des festen Körpers zu positionieren.

12. Verfahren nach Anspruch 1,
**dadurch gekennzeichnet, dass** das Verfahren vorsieht, für die Verstärkungsverkleidungen Muster zu wählen mit Kreuzungslinien mehrerer Paare von Schichten (A, B), die zueinander parallel oder nicht parallel bewußt versetzt sind, um Steifigkeitswiderstandsverluste auf den Verstärkungsverkleidungen des Teils (P) aus Verbundwerkstoffen zu begrenzen.

13. Verbundwerkstoffteil (P) mit einer verstärkten Verkleidung hergestellt nach dem Verfahren gemäß einem der Ansprüche 1 bis 12.

14. Teil (P) nach Anspruch 13, **dadurch gekennzeichnet, dass** dieses Teil (P) ein Rotorblatt eines Hauptrotors eines Drehflügelflugzeugs oder eines Helikopters ist.

15. Teil (P) nach Anspruch 13, **dadurch gekennzeichnet, dass** dieses Teil (P) ein Rotorblatt eines Heckrotors eines Drehflügelflugzeugs oder eines Helikopters ist.

16. Teil (P) nach Anspruch 13, **dadurch gekennzeichnet, dass** dieses Teil (P) ein Rotorblatt eines angetriebenen Propellers eines Luftfahrzeugs ist.

## Claims

1. Method for producing a reinforcing coating for a part (P) made of composite materials, this method providing for using dry or pre-impregnated reinforcing fibres in the form of slivers (Ai, Bi), laying said slivers (Ai, Bi) in layers (A, B) by placement on a solid body to be covered for reinforcement of the part (P), using two layers (A, B) of longitudinal slivers, locating an origin portion of the solid body which constitutes the origin for laying the slivers, determining directions for placement of the slivers (Ai, Bi) relative to a determined direction (D) of the solid body, determining an order for laying each of the slivers (Ai, Bi) in each of the placement directions in order to define at least one crossing direction of at least one crossing line of the slivers (Ai, Bi), determining a number of laying operations for the two layers (A, B) with a predefined number of slivers (Ai, Bi) for each laying operation, a pitch of the slivers (Ai, Bi) laid with each laying operation, then superposing or interlacing the slivers of two successive laying operations in order to constitute the two layers (A, B) in the form of at least one particular pattern;
**characterised by** an angular orientation of the slivers (Ai, Bi) of each layer (A, B), respectively of 0° and another, non-zero angle relative to said determined direction (D) of the solid body, and in that an interlaced pattern type is selected to give layer crossing lines parallel to a longitudinal direction (L) of the solid body, by forming interlaced patterns which limit the number of crossing lines of layers (A, B) in said longitudinal direction (L) of the solid body to a single line, the angular orientations of the slivers (Ai, Bi) of each layer (A, B) being complementary between 0° and 90°, for taking up centrifugal forces and bending forces of said solid body.

2. Method according to Claim 1,
**characterised in that** the slivers (Ai, Bi) or rovings are of a width included between 6.35 mm and 100 mm, of a thickness included between 0.2 mm and 0.4 mm and of a length included between 100 mm and 1000 mm.

3. Method according to Claim 1,
**characterised in that** this method provides for using tapes, rovings or fibres dry or pre-impregnated, of glass, aramid, basalt, carbon, or natural fibres of flax, hemp, cotton, silk, for making the slivers (Ai, Bi).

4. Method according to Claim 1,
**characterised in that** this method provides for locating the origin portion of the solid body and thus of the part (P), said origin portion constituting the origin for the laying operations in a plane of pin bushings of this solid body, and on the line of twist of this solid body and thus of the part (P) .

5. Method according to Claim 1,
**characterised in that** this method provides for superposing the slivers (Ai, Bi) of the two layers (A, B) by selecting a pitch equal to a determined integral or non-integral number of widths of slivers (Ai, Bi).

6. Method according to Claim 1,
**characterised in that** this method provides for interlacing the slivers (Ai, Bi) of the two layers (A, B) by selecting a pitch equal to a determined integral number of widths of slivers (Ai, Bi).

7. Method according to Claim 1,
**characterised in that** this method provides for simultaneously interlacing a number "x" of slivers (Ai) of the first layer (A) with a number "x" of slivers (Bi) of the second layer (B), said slivers (Ai, Bi) of the first and of the second layer (A, B) having a pitch equal to a number "y".

8. Method according to Claim 7,
**characterised in that** this method provides for simultaneously interlacing four slivers (Ai) of the first layer (A) with four slivers (Bi) of the second layer (B), said slivers (Ai, Bi) having a pitch equal to 2.

9. Method according to Claim 1,
**characterised in that** this method provides for using an angular orientation for the slivers (Ai, Bi) of each layer (A, B), respectively of +/- 45° relative to said longitudinal direction (L) of the solid body and thus of the part (P).

10. Method according to Claim 1,
**characterised in that** this method provides for using an angular orientation of the slivers (Ai, Bi) of each layer (A, B), respectively of 0° and 90° relative to said longitudinal direction (L) of the solid body and thus of the part.

11. Method according to Claim 1,
**characterised in that** this method provides for positioning said single crossing line of layers (A, B) in a longitudinal direction (L) perpendicular to a chord (C) of the solid body.

12. Method according to Claim 1,
**characterised in that** this method provides for selecting, for reinforcing coatings, patterns with crossing lines of a plurality of pairs of layers (A, B) which are voluntarily mutually offset, parallel or non-parallel, in order to limit losses of stiffness strength in these reinforcing coatings of the part (P) made of composite materials.

13. Part (P) made of composite material comprising a reinforced coating produced according to the method in accordance with one of Claims 1 to 12.

14. Part (P) according to Claim 13, **characterised in** this part (P) is a blade for a main rotor of a rotorcraft or a helicopter.

15. Part (P) according to Claim 13, **characterised in** this part (P) is a blade for an anti-torque rotor of a rotorcraft or a helicopter.

16. Part (P) according to Claim 13, **characterised in** this part (P) is a blade for an aircraft driving propeller.
